(19) Europäisches Patentamt
European Patent Office
Office européen des brevets

(11) EP 2 579 368 B1

(12) # EUROPEAN PATENT SPECIFICATION

(45) Date of publication and mention of the grant of the patent:
**22.04.2015 Bulletin 2015/17**

(21) Application number: **11789829.6**

(22) Date of filing: **31.05.2011**

(51) Int Cl.:
***H01M 4/587** (2010.01)* ***C01B 31/02** (2006.01)*
***C01B 31/04** (2006.01)*

(86) International application number:
**PCT/JP2011/062540**

(87) International publication number:
**WO 2011/152426 (08.12.2011 Gazette 2011/49)**

(54) **COKING COAL COMPOUND FOR ANODE MATERIAL OF LITHIUM ION SECONDARY BATTERY**

VERKOKUNG EINER KOHLEVERBINDUNG FÜR EIN ANODENMATERIAL EINER LITHIUMIONEN-SEKUNDÄRBATTERIE

COMPOSÉ DE CHARBON À COKE DESTINÉ À UN MATÉRIAU D'ANODE DE BATTERIE RECHARGEABLE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2010 JP 2010124616**

(43) Date of publication of application:
**10.04.2013 Bulletin 2013/15**

(73) Proprietor: **JX Nippon Oil & Energy Corporation**
**Chiyoda-ku**
**Tokyo 100-8162 (JP)**

(72) Inventors:
- **TANO, Tamotsu**
  **Kuga-gun**
  **Yamaguchi 740-0061 (JP)**
- **OYAMA, Takashi**
  **Kuga-gun**
  **Yamaguchi 740-0061 (JP)**
- **ODA, Toshiyuki**
  **Kuga-gun**
  **Yamaguchi 740-0061 (JP)**
- **FUJINAGA, Ippei**
  **Kuga-gun**
  **Yamaguchi 740-0061 (JP)**
- **SUZUKI, Takashi**
  **Yokohama-shi**
  **Kanagawa 221-0021 (JP)**

(74) Representative: **Patentanwälte Vollmann & Hemmer**
**Wallstraße 33a**
**23560 Lübeck (DE)**

(56) References cited:
**EP-A1- 1 786 008**
**JP-A- 8 167 414**
**JP-A- 2006 093 401**
**JP-A- 2009 117 256**
**JP-A- 2011 065 961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a raw petroleum coke composition as a raw material of an anode material of a lithium ion secondary battery capable of improving the output characteristics.

### Background Art

A lithium ion secondary battery is light-weighted and has high input/output characteristics compared with a conventional secondary battery such as a nickel-cadmium battery, a nickel-metal hydride battery and a lead battery. Such a lithium ion secondary battery has been expected in recent years as an electric storage device for vehicles, industrial facilities and electric power supply infrastructure. A carbon material is used as a carrier for an active material making up an electrode of secondary battery, and has been subjected to various examinations in order to enhance the performance of secondary battery (see Patent Documents 1 and 2, for example).

Typically this kind of battery is configured in such a manner that a cathode comprising lithium capable of reversible intercalation and an anode comprising a carbon material are opposed to each other via a non-aqueous electrolyte. This kind of battery is assembled in a discharge state so that it does not become a dischargeable state unless it is charged. The following describes the charge/discharge reaction while exemplifying the embodiment in which lithium cobaltate (LiCoO2) is used as the cathode, a carbon material is used as the anode and a non-aqueous electrolyte containing lithium salt is used as electrolyte.

To begin with, during charge of the first cycle, lithium contained in the cathode is released to the electrolyte (Formula 1 below), so that the cathode potential thereof shifts to a noble direction. At the anode, lithium released from the cathode is absorbed by the carbon material (Formula 2 below), so that the anode potential shifts to a less noble direction. Typically when a difference between cathode and anode potentials, i.e., a battery voltage reaches a predetermined value, the charge ends. This value is called a charge cut-off voltage. Then, when discharge is performed, lithium absorbed by the anode is released, so that the anode potential shifts to a noble direction, and the lithium is absorbed again by the cathode, so that the cathode potential shifts to a less noble direction. Similarly to the charging, discharge ends when a difference between cathode and anode potentials, i.e., a battery voltage reaches a predetermined value. That value is called a discharge cut-off voltage. The complete reaction of such charge and discharge is shown in Formula 3 below. In the following second cycle or later, the charge and discharge reactions (cycles) progress while lithium moves between the cathode and the anode.

$$LiCoO_2 \underset{\text{discharge}}{\overset{\text{charge}}{\rightleftarrows}} Li_{1-x}CoO_2 + xLi^+ \quad \text{..... (Formula 1)}$$

$$C + xLi^+ \underset{\text{discharge}}{\overset{\text{charge}}{\rightleftarrows}} Li_xC \quad \text{...... (Formula 2)}$$

$$LiCoO_2 + C \underset{\text{discharge}}{\overset{\text{charge}}{\rightleftarrows}} Li_{1-x}CoO_2 + Li_xC \quad \text{..... (Formula 3)}$$

A carbon material used for the anode has a structure of the lamination of planar hexagonal networks of carbon atoms, and intercalation/deintercalation reaction of lithium ions progresses at the edges of the planar hexagonal networks during charge/discharge. Exemplary raw materials of the carbon material for the anode of lithium ion secondary battery include graphite containing natural graphite or coke as a carbon source, graphite fiber containing pitch-based carbon fiber or vapor grown carbon fiber as a carbon source, non-graphitizable carbon and graphitizable carbon. The petroleum-derived coke is preferably used from the viewpoint of quality and cost. The petroleum-derived coke includes one produced by a delayed coking process and one produced by a fluid coking process. Currently the petroleum coke produced by

the delayed coking process dominates the market. A coking composition just taken out of a coker in the delayed coking process or the fluid coking process is called raw petroleum coke (raw coke). Various examinations have been made for the raw petroleum coke (raw coke) as a raw coke composition for a graphite electrode and a capacitor (Non-Patent Document 1, Patent Document 3). The raw coke composition, however, varies depending on the applications, and is not sufficient as a carbon material for an anode of lithium ion secondary battery.

Prior Art Documents

Patent Documents

Patent Document 1: Japanese Patent No. 3056519
Patent Document 2: Japanese Patent Application Examined

Publication No. 4-24831

Patent Document 3: Japanese Patent No. 4233508

Non-Patent Documents

Non-Patent Document 1: Carbon, Vol.26, No.1, p49-55, 1988

Summary of the Invention

Problems to be Solved by the Invention

As stated above, this kind of battery has been examined recently as an electric storage device for vehicles, industrial facilities and electric power supply infrastructure. When the battery is used for these purposes, extremely high output characteristics are required, compared with the usage for mobile phones or laptops. For instance, higher output characteristics are required for vehicles during starting a vehicle from a stop state or for electric power supply infrastructure during handling of a sudden load fluctuation on the demanding side.

Herein the output characteristics refer to the ratio capable of, when the battery is discharged at a high current, maintaining the capacity that is obtained during discharge at a low current. In a discharge state, the cathode potential of a battery polarizes to a less noble direction, while the anode potential polarizes to a noble direction. The magnitude of the electrochemical polarization depends on the current (strictly, current density mA/cm2). On the other hand, since the voltage of the battery is a difference between the cathode potential (Formula 1) and the anode potential (Formula 2), the voltage of the battery will be lowered as the battery is discharged at a larger current. Accordingly, the capacity that can be obtained when the voltage reaches the discharge cut-off voltage also will be lowered inevitably.

As effective means to solve this problem, electrochemical polarization of the anode of the battery to a noble direction in the discharge state may be lowered. As the electrochemical polarization of the anode during discharge is suppressed, the battery voltage will accordingly increase so that the capacity obtained until the voltage reaches the discharge cut-off voltage can be increased inevitably. Examples of the anode carbon material proposed conventionally include graphite materials such as various natural graphite, synthetic graphite and expanded graphite which have been subjected to appropriate pulverization; a carbon material such as mesocarbon microbeads, mesophase pitch-based carbon fiber, vapor grown carbon fiber, pyrolytic carbon, petroleum coke, pitch-based coke and needle coke which have been subjected to carbonization; a synthetic graphite material produced by graphitization of the carbon material; or a mixture thereof. However, it is difficult to significantly suppress the electrochemical polarization during discharge at a large current.

In order to improve the aforementioned output characteristics of lithium ion secondary battery, it is an object of the present invention to develop a raw petroleum coke composition as a raw material for an anode carbon material that can improve, when a battery is discharged at a high current, the ratio capable of maintaining the capacity obtained during discharge at a low current, thereby providing a raw petroleum coke composition for an anode carbon material for the lithium ion secondary battery used for vehicles, industrial facilities and electric power supply infrastructure requiring high output characteristics.

Means for Solving the Problems

In order to cope with the aforementioned problem, in a first aspect of the present invention, provided is a raw petroleum coke composition for an anode carbon material of a lithium ion secondary battery, the raw petroleum coke composition being produced by subjecting to a heavy-oil composition to a delayed coking process, and comprising an atomic ratio of hydrogen atoms H to carbon atoms C (H/C atomic ratio) of 0.35 to 0.50, and a micro-strength of 7 to 17% by weight.

In a second aspect of the present invention, provided is a method for producing an anode carbon material of a lithium ion secondary battery comprising the steps of: pulverizing the raw petroleum coke composition according to the first aspect of the invention into particles having an average particle diameter of 30 μm or less, and subjecting the particles to carbonization and/or graphitization.

In a third aspect of the present invention, provided is a lithium ion secondary battery comprising an anode comprising the carbon material produced by the method according to the second aspect of the invention as an anode material.

Effect of the Invention

According to a raw petroleum coke composition of the present invention, when it is used as an anode of a lithium ion secondary battery and the battery is discharged at a high current, the battery can improve the ratio capable of maintaining the capacity obtained during discharge at a low current.

Brief Description of the Drawings

Fig. 1 is a schematic cross-sectional view of a cell used for a battery evaluation experiment.

Fig. 2 shows a relationship between H/C of a raw petroleum coke composition and a discharge capacity maintenance ratio of a battery.

Fig. 3 shows a relationship between micro-strength of a raw petroleum coke composition and a discharge capacity maintenance ratio of a battery.

Mode for Carrying out the Invention

As a raw material for an anode carbon material of a lithium ion secondary battery, "a raw petroleum coke composition produced by subjecting a heavy-oil composition to a delayed coking process" is generally known. This delayed coking process is very suitable for mass production of a carbon material of high quality, and various types of coke products are mass-produced by this process.

A carbon material obtained by carbonization and/or graphitization of a raw petroleum coke composition has a crystal structure that is highly influenced by a crystal organization (physical properties) of the raw petroleum coke composition as a precursor raw material. A carbon material obtained by carbonization and/or graphitization of a raw petroleum coke composition comprising physical properties as recited in a first aspect of the present invention, i.e. a ratio of hydrogen atoms H to carbon atoms C (H/C atomic ratio) of 0.35 to 0.50, and a micro-strength from 7 to 17% by weight, has a feature of a crystalline organization capable of securing a systematic diffusion path of lithium ions and capable of suppressing a physical variation ratio of planar hexagonal networks caused by the diffusion of lithium ions. Herein, the diffusion path of lithium ions refer to a pseudo two-dimensional space formed between adjacently laminated planar hexagonal networks and a three-dimensional space formed between adjacent crystallites. Accordingly a lithium ion secondary battery comprising, as an anode, a carbon material obtained by using a raw petroleum coke composition of the present invention as a raw material, can realize extremely high output characteristics.

The H/C of the raw petroleum coke composition means a ratio of a value obtained by dividing the total hydrogen content (TH (% by weight)) by atomic weight of hydrogen to a value obtained by dividing the total carbon content (TC (% by weight)) by atomic weight of carbon.

The total hydrogen content can be obtained by complete combustion of a sample in an oxygen stream at 750°C, followed by measurement of water content generated from combustion gas by using a coulometric titration method (Karl Fischer's method). In the coulometric titration-type Karl Fischer's method, an electrolyte containing iodide ions, sulfur dioxide, base (RN) and alcohol as major components is placed in a titration cell in advance, and then a sample is added in the titration cell so as to let water in the sample react as shown in Formula (4) below. For example, the sample which

has been subjected to a coking process is cooled under a dry atmosphere and is measured:

$$H20+I2+SO2+CH3OH+3RN \rightarrow 2RN \cdot HI+RN \cdot HSO4CH3 \quad (4)$$

Iodine necessary for this reaction can be obtained through an electrochemical reaction (bielectron reaction) of iodide ions as in Formula (5):

$$2I-+2e- \rightarrow I2 \quad (5)$$

Since 1 mol of water and 1 mol of iodine react, an electric quantity necessary for titration of 1 mg of water can be obtained by Faraday's law as in Formula (6):

$$(2 \times 96478)/(18.0153 \times 103)=10.71 \text{ coulomb} \quad (6)$$

Herein, the constant 96478 is the Faraday constant, and 18.0153 is the molar weight of water.

The electric amount required for the generation of iodine is measured, whereby the water content can be obtained. Further based on the thus obtained water content, conversion into the hydrogen content is performed, which is then divided by the weight of the sample used for the measurement, whereby the total hydrogen content (TH (% by weight)) can be calculated.

The total carbon can be obtained by combustion of a sample in an oxygen stream at 1,150°C so as to be converted into carbon dioxide (partially carbon monoxide) and be conveyed by an excess oxygen stream to a CO2+CO infrared detector for calculation of the total carbon content (TC (% by weight)).

The micro-strength is a value obtained as follows. The 2 g of a sample of 20 to 30 mesh and twelve steel balls each having a diameter of 5/161 inch (7.9 mm) are placed in a steel cylinder (inner diameter: 25.4 mm, length: 304.8 mm), and the vertical face of the cylinder is rotated 800 times at 25 rpm in a direction orthogonal to the cylinder (i.e., rotated from the cylinder-standing state so that the top and the bottom of the cylinder are changed while keeping the rotational axis horizontal as if a propeller rotated). Thereafter sieving with 48 mesh (opening 0.295 mm) is performed, and the micro-strength is obtained as a percentage of the weight on the sieve to the sample weight.

When the H/C atomic ratio of a raw petroleum coke composition is less than 0.30, widening of the planar hexagonal networks easily occurs during carbonization and/or graphitization, thereby mutually inhibiting the growth between adjacent crystallites. As a result, distortion is introduced to the crystallites so that parallelism between overlaid adjacent planar hexagonal networks is lowered. Thus, it is not preferable. The lowering of parallelism generates the dependence on orientation of a diffusion rate when the absorbed lithium ions are released. Accordingly, a release rate, i.e., the output characteristic of the battery is remarkably lowered. Thus, it is not preferable.

On the other hand, when the H/C atomic ratio in the raw coke composition exceeds 0.50, since the structure of its carbon skeleton is not formed sufficiently, melting occurs at the subsequent carbonization and/or graphitization region so that three-dimensional lamination arrangement of the planar hexagonal networks will lose the alignment greatly. As a result, the diffusion path of lithium ions between the laminated adjacent planar hexagonal networks will be close to a curved path, thereby preventing lithium ions from moving. Thus, it is not preferable.

As stated above, H/C of the raw petroleum coke composition is limited to from 0.30 to 0.50. When a raw petroleum coke composition having the physical property in this range is carbonized and/or graphitized, a path for allowing lithium ions to move at a high diffusion rate is formed. This path is a pseudo two-dimensional space formed between adjacently laminated planar hexagonal networks, and has a feature that the diffusion moving rate of lithium ions hardly generates the dependence on orientation because the parallelism of adjacently laminated planar hexagonal networks is extremely high. That is, as long as H/C of the raw petroleum coke composition is within the range of 0.30 to 0.50, parallelism that hardly generates the dependence of diffusion rate on orientation can be achieved. Accordingly, when such a carbon material is used as an anode of a lithium ion secondary battery, extremely high output characteristic can be obtained.

In the first aspect of the present invention, the micro-strength of a raw petroleum coke composition is also specified to be 7 to 17% by weight. This micro-strength is an index for a bonding strength between adjacent crystallites. Typically, unorganized carbon having a structure other than a benzene ring as a structural unit of the planar hexagonal networks is present between adjacent crystallites, and has a function of bonding adjacent crystallites. This unorganized carbon survives even after carbonization and/or graphitization of the raw petroleum coke composition and plays a similar role.

When the micro-strength of the raw petroleum coke composition is less than 7% by weight, the bonding strength between adjacent crystallites is extremely weak. Even when such a raw petroleum coke composition is carbonized

and/or graphitized, a carbon material of a similar property can be obtained. Accordingly, when intercalation of lithium ions is reversibly performed to such a carbon material, a physical variation ratio of planar hexagonal networks resulting from the diffusion movement of lithium ions increases, and deterioration of the parallelism due to such a variation rate, i.e., a variation of planar hexagonal networks, extremely inhibits the diffusion of lithium ions, thereby resulting in dependence of the diffusion rate on orientation. Thus, it is not preferable.

On the other hand, when the micro-strength of the raw petroleum coke composition exceeds 17% by weight, the bonding strength between adjacent crystallites becomes extremely large. This is because unorganized carbon existing between adjacent crystallites forms a firm three-dimensional chemical bonding with its adjacent crystallites. Herein, the unorganized carbon means carbon which is not incorporated into planar carbon hexagonal networks, and has a feature of being gradually taken into the planar carbon hexagonal networks as the processing temperature rises, while interrupting the growth of adjacent carbon crystallites and selective orientation. When such a raw petroleum coke composition is carbonized and/or graphitized, a carbon material of a similar property will be obtained. Accordingly, when intercalation of lithium ions is performed to such a carbon material, unorganized carbon existing between adjacent crystallites inhibits the diffusion movement of lithium ions. Thus, it is not preferable. This is because such unorganized carbon existing between adjacent crystallites forms a firm three-dimensional chemical bonding with its adjacent crystallites. Since the diffusion path of lithium ions includes not only a pseudo two-dimensional space formed at adjacently laminated planar hexagonal networks but also a three-dimensional space formed between adjacent crystallites, the diffusion rate of lithium ions in this three-dimensional space will depend on the state of the unorganized carbon forming the three-dimensional space, i.e., the bonding strength of the unorganized carbon and crystallites. Accordingly, when this bonding strength is large, the movement diffusion rate of lithium ions is lowered. Thus, it is not preferable.

As stated above, the micro-strength of the raw petroleum coke composition is limited to 7 to 17% by weight. When a raw petroleum coke composition having a physical property in this range is carbonized and/or graphitized, a path for allowing lithium ions to move at a high diffusion rate is formed. This path is a pseudo two-dimensional space formed at adjacently laminated planar hexagonal networks and a three-dimensional space formed between adjacent crystallites. When the raw petroleum coke composition has a micro-strength of 7 to 17% by weight, the parallelism between planar hexagonal networks can be kept high even when intercalation is performed reversibly, and the bonding strength between unorganized carbon forming the three-dimensional space and the crystallites is weak. Accordingly when such a carbon material is used as an anode of a lithium ion secondary battery, the battery can achieve extremely high output characteristics.

As described above, a carbon material obtained by carbonization and/or graphitization of a raw petroleum coke composition having a feature of the H/C atomic ratio of 0.35 to 0.50 and the micro-strength of 7 to 17% by weight can have a crystalline organization capable of securing a systematic diffusion path for lithium ions and suppressing a physical variation ratio of the planar hexagonal networks resulting from the diffusion of lithium ions. Such a raw petroleum coke composition can be obtained by subjecting a heavy-oil composition to a delayed coking process.

A component of the heavy-oil composition includes bottom oil (decant oil) of fluid catalytic cracking oil (FCC DO), highly hydrodesulfurized heavy oil, vacuum residual oil (VR), coal liquefaction oil, coal solvent extraction oil, ordinary pressure residue oil, shale oil, tar sand bitumen, naphtha tar pitch, ethylene bottom oil, coal tar pitch and heavy oil by hydrorefining of the foregoing. When two or more types of these heavy-oils are blended to prepare the heavy-oil composition, the blending ratio may be appropriately adjusted according to the properties of the raw material oils so that a raw petroleum coke composition obtained after coking by a delayed coking process has the H/C atomic ratio of 0.30 to 0.50 and the micro-strength of 7 to 17% by weight as physical properties thereof. The stock oil properties will vary depending on the type of crude oil and on the processing conditions employed until the stock oil is obtained from the crude oil.

Especially preferable examples of the heavy-oil composition include a heavy-oil composition satisfying three conditions of: (1) having an aromatic index fa of 0.3 to 0.65; (2) having normal paraffin content of 5 to 20% by weight; and (3) containing desulfurized and deasphalted oil in the range of 7 to 15% by weight. There has been no example in which desulfurized and deasphalted oil is added for production of raw coke, and the present inventors have found that it is especially effective to contain the desulfurized and deasphalted oil.

Thermal decomposition and polycondensation reaction of heavy oil by a high-temperature treatment produces raw coke via the step of producing, as an intermediate product, a large liquid crystal known as a mesophase. At this time, it is especially preferable to use a stock oil composition (heavy-oil composition) comprising all of the following components: a heavy-oil component (1) forming a favorable bulk mesophase; a heavy-oil component (2) which can produce gas having a function to limit the size of a planar hexagonal network lamination configuring the mesophase during polycondensation of the mesophase for carbonization and solidification; and a component (3) for bonding these disconnected planar hexagonal network laminations. The heavy-oil component (1) forming a favorable bulk mesophase is a component giving an aromatic index fa of 0.3 to 0.65, the component (2) which can produce gas is a component corresponding to a normal paraffin content of 5 to 20% by weight, and the component (3) for bonding the planar hexagonal network laminations is 7 to 15% by weight of the desulfurized and deasphalted oil. The stock oil composition (heavy-oil

composition) has a density of 0.880 g/cm3 or more, preferably 0.900 g/cm3 or more at 15°C. Typically when the above (3) is satisfied, the above (1) and (2) are also satisfied.

Such a heavy-oil composition is preferably used as a raw material of the raw petroleum coke composition of the present invention because planar hexagonal networks formed with a heavy-coil component for producing a favorable bulk mesophase are limited to a relatively small size, and therefore the parallelism of adjacent networks of the planar hexagonal network lamination formed after coking can be kept high, and additionally the desulfurized and deasphalted oil can bond adjacent planar hexagonal network laminations appropriately.

Herein fa means a value that can be calculated by Formula 7:

$$fa=3.65\times D - 0.00048H - 2.969 \cdots \text{(Formula 7)},$$

wherein H=875x[log{log(V+0.85)}]
D: density of heavy oil (g/cm3)
V: viscosity of heavy oil (mm2/sec.).

The content of normal paraffin of the stock oil composition means the value obtained by the measurement using a gas chromatograph with a capillary column. More specifically, after verification of normal paraffin with a reference substance, a non-aromatic component sample separated by the elution chromatography is passed through the capillary column for the measurement. The content can be calculated from this measured value based on the total weight of the stock oil composition.

The desulfurized and deasphalted oil is obtained by treating deasphalted oil with indirect desulfurization equipment (Isomax), wherein the deasphalted oil is residual oil obtained after an asphalten resin component contained in the vacuum distillation residue is removed with propane.

It is not preferable that the aromatic index fa of the heavy-oil composition is less than 0.3. It is because the yield of coke from the heavy-oil composition will be drastically lowered, favorable bulk meshophase cannot be formed, and a crystal structure is hardly developed even by carbonization and graphitization. On the other hand, the aromatic index fa exceeding 0.65 generates lots of mesophases rapidly in the matrix during the course of raw coke production. This will mainly cause rapid coalescence of mesophases instead of single growth of itself. Consequently, since the coalescence rate of mesophases is faster than the generation rate of gas from the normal paraffin-containing component, it becomes impossible to limit the planar hexagonal networks of bulk mesophase to a small size. Thus, it is not preferable.

For these reasons, the aromatic index fa of the heavy-oil composition is especially preferably in the range of 0.3 to 0.65. The value of fa can be calculated from density D and viscosity V of the heavy-oil composition. The heavy-oil composition especially preferably has the density D of 0.91 to 1.02 g/cm3 and the viscosity of 10 to 220 mm2/sec., and has the value of fa of 0.3 to 0.6.

On the other hand, the normal paraffin component appropriately contained in the heavy-oil composition plays an important role of generating gas during coking so as to limit the bulk mesophase to a small size. The gas generation also has a function of allowing adjacent mesophases limited to a small size to be oriented uniaxially, thereby subjecting the system as a whole to selective orientation. When the content of the normal paraffin-containing component is less than 5% by weight, unnecessary growth of mesophases takes place so that huge carbon planar hexagonal networks will be formed. Thus, it is preferable. When the content exceeds 20% by weight, generation of gas from the normal paraffin becomes excess so that there is tendency to act in a direction of disturbing the orientation of the bulk mesophase and it becomes difficult to develop a crystal structure even with carbonization and graphitization. Thus, it is not preferable. As stated above, the content of the normal paraffin is especially preferably in the range of 5 to 20% by weight.

As mentioned above, the desulfurized and deasphalted oil plays a role of bonding adjacent planar hexagonal network laminations appropriately. The content of the desulfurized and deasphalted oil in the heavy-oil composition is especially preferably in the range of 7 to 15% by weight. When the content is less than 7% by weight or more than 15% by weight, the heavy-oil composition obtained after coking will have a micro-strength of 7% by weight or less or of 17% by weight or more. Thus, it is not preferable.

The heavy-oil composition having the aromatic index fa of 0. 3 to 0.65 and the normal paraffin content of 5 to 20% by weight, and containing desulfurized and deasphalted oil in the range of 7 to 15% by weight, can be obtained as follows, for example.

Ordinary-pressure distillation residue oil is hydrodesulfurized in the presence of a catalyst so that the hydrocracking ratio is preferably 25% or less, thus obtaining hydrodesulfurization oil. Hydrodesulfurization conditions preferably include the total pressure of 16 MPa or more, the hydrogen partial pressure of 7 to 20 MPa and the temperature of 300 to 500°C.

Further, desulfurized vacuum light oil (preferably having the sulfur content of 500 weight-ppm or less and the

density of 0.8 g/cm3 or more at 15°C) obtained by direct desulfurization of ordinary-pressure distillation residue oil is subjected to fluid catalytic cracking, thus resulting in fluid catalytic cracking residual oil.

Further, desulfurized and deasphalted oil is obtained by desulfurizing deasphalted oil obtained by separation after mixing vacuum distillation residue oil with a solvent such as propane or butane. The desulfurized and deasphalted oil preferably has the sulfur content of 500 weight-ppm or less.

The hydrodesulfurization oil and the fluid catalytic cracking residual oil are mixed preferably at the weight ratio of 1:5 to 1:3, to which desulfurized and deasphalted oil of preferably 7 to 15% by weight (the mixture as a whole containing the desulfurized and deasphalted oil itself is 100 % by weight) is added, thus resulting in a stock oil composition.

This stock oil composition is introduced to a delayed coker, where coking is performed under an inert gas atmosphere and preferably at the pressure of 0.1 to 0.8 MPa and at 400 to 600°C, whereby the raw petroleum coke composition can be obtained.

The heavy-oil composition having such features is subjected to coking, whereby the heavy-oil composition of the present invention is formed. Such a heavy-oil composition is carbonized/graphitized and is used as a carbon material for an anode of a lithium secondary battery.

A delayed coking process is preferable as a method for coking of a heavy-oil composition satisfying predetermined conditions. More specifically, a method of heating a stock oil composition by a delayed coker under a condition of controlled coking pressures to obtain raw coke is preferable. At this time, preferable operational conditions of the delayed coker include the pressure of 0.1 to 0.8 MPa and the temperature of 400 to 600°C.

Such a preferable range is set for the operational pressure of the coker because the emission rate of gas generated from a normal paraffin-containing component to the outside the system can be controlled by pressure. As stated above, since the size of carbon planar hexagonal networks configuring mesophase is controlled by the gas generated, the residence time of the generated gas in the system is an important control parameter for deciding the size of the planar hexagonal networks. Such a preferable range is set for the operational temperature of the coker because such temperatures are required for the growth of mesophase from the heavy oil prepared to obtain the advantageous effects of the present invention.

The following describes a second aspect of the present invention. In the second aspect of the invention, provided is a method for producing an anode carbon material of a lithium ion secondary battery, comprising the steps of pulverizing the raw petroleum coke composition for an anode material of a lithium ion secondary battery described in the first aspect of the invention into particles having an average particle diameter of 30 μm or less, preferably 5 to 30 μm, and subjecting the particles to carbonization and/or graphitization.

The step of pulverizing is not particularly limited, and includes a well-known art such as a disk crusher and a mill. The average particle diameter is based on the measurement by a laser diffraction particle size analyzer.

Herein the average particle diameter for the particle size distribution after pulverizing is selected to be 30 μm or less because such a particle diameter is typically and suitably used as an anode carbon material of a lithium ion secondary battery. That is, the real reason for selecting such a numerical range is that after the raw petroleum coke composition is pulverized and classified if needed, the resultant is never subjected to the pulverization process before it is used as an anode material of a lithium ion secondary battery through carbonization and/or graphitization.

If carbide obtained by carbonizing the raw petroleum coke composition, or graphite obtained by graphitizing the carbide is pulverized and classified, planar hexagonal networks present on the surface of particles will generate dangling bonds due to disconnection of chemical bonding at their edges. The dangling bonds mean localized electrons having non-saturated valence electron bond without bonding partners. If such carbide or graphite is used as an anode carbon material of a lithium ion secondary battery, these localized electrons will lower the diffusion rate of intercalated lithium ions so that output characteristics as the battery deteriorate and the advantageous effects obtained from using the raw petroleum coke composition of the present invention as the raw material are hardly obtained. Thus, it is not preferable.

Pulverization of the raw petroleum coke composition of the present invention also introduces localized electrons onto the particle surfaces. However, it is then carbonized and/or graphitized before it is used as an anode carbon material of a lithium ion secondary battery. Accordingly, the localized electrons will be taken up into planar hexagonal networks or chemically bond to each other, thereby extremely lowering the density of localized electrons after heat treatment. As a result, when the raw petroleum coke composition is used as an anode carbon material of a lithium ion secondary battery, preferable features thereof can be exerted sufficiently.

The raw petroleum coke composition powder having an average particle diameter of 30 μm or less after pulverization is heated preferably from 900 to 1,500°C for carbonization (prebaking). It is carried out typically for 3 to 10 hours under an inert gas atmosphere such as nitrogen, argon or helium. In this step, atoms other than hydrogen, nitrogen and the like are vaporized so that the carbon content is increased preferably to 98 to 99% by weight.

The carbonized raw petroleum coke composition is then graphitized.

Graphitization preferably comprises heating under an inert gas atmosphere such as nitrogen, argon or helium at preferably 2,500 to 3,000°C, more preferably 2,700 to 3,000°C, for 1 to 6 hours, for example. Through the graphitization,

a graphite material for an anode of a lithium ion secondary battery can be obtained.

In a third aspect of the present invention, provided is a lithium ion secondary battery comprising the carbon material produced by the method described in the second aspect of the invention as an anode material. This battery has extremely excellent output characteristics as a feature. This is because the battery uses the carbon material produced by the method in the second aspect of the invention as the anode.

Examples of the method for producing the anode for a lithium ion secondary battery include, but not limited to, a compression molding into predetermined dimensions of a mixture (anode mix) comprising the carbon material according to the present invention, a binder (binding agent), an optional conducting aid and an optional organic solvent. Another method may include a method comprising the steps of kneading, in an organic solvent, the carbon material according to the present invention, a binder (binding agent), a conductive aid and the like to be a slurry, applying the slurry onto a collector such as copper foil, drying the resultant to obtain a dried product (anode mix), rolling the same, and then cutting into predetermined dimensions.

Examples of the binder (binding agent) include polyvinylidene fluoride, polytetrafluoroethylene and SBR (styrene-butadiene rubber). The content of the binder in the anode mix is about 1-30 parts by weight with respect to 100 parts by weight of the carbon material, which may be selected appropriately as needed based on the design of the battery.

Examples of the conducting aid include carbon black, graphite, acetylene black, a conductive indium-tin oxide, and a conductive polymer such as polyaniline, polythiophene or polyphenylenevinylene. The amount of conducting aid is preferably 1 to 15 parts by weight with respect to 100 parts by weight of the carbon material.

Examples of organic solvent include dimethylformamide, N-methylpyrrolidone, isopropanol and toluene.

The method for mixing the carbon material, a binder, an optional conducting aid and an optional organic solvent may comprise use of a known apparatus such as a screw-type kneader, a ribbon mixer, a universal mixer or a planetary mixer. The obtained mixture is molded with compression by a roller or a press. The pressure is preferably about 100 to 300 MPa.

The material of the collector is not particularly limited, and any material can be used without particular restrictions unless they form an alloy with lithium. Examples thereof include copper, nickel, titanium and stainless steel. As for the shape of the collector, any shape can be used without particular restrictions, and examples thereof include a band in the form of foil, perforated foil or mesh. A porous material such as a porous metal (metal foam) or carbon paper may also be used as the collector.

Examples of the method for applying the slurry onto the collector include, but not limited to, known methods such as metal mask printing, electrostatic coating, dip coating, spray coating, roll coating, doctor blading, gravure coating, screen printing and die coating. The applying may be typically followed by optional rolling treatment with a flat press or a calendar roll.

The collector and the anode slurry molded into the form of a sheet, pellets or the like may be integrated by a known method such as rolling, pressing or a combination thereof.

A lithium ion secondary battery comprising the carbon material for an anode of a lithium ion secondary battery according to this embodiment can be produced by, for example, arranging the thus formed anode and a cathode so as to be opposed to each other via a separator therebetween, and injecting electrolyte solution therein.

Examples of the active material for the cathode include, but not limited to, a metal compound, a metal oxide, a metal sulfide or a conductive polymer material, which can have doping of or intercalation with lithium ions. Specific examples include lithium cobaltate (LiCoO2), lithium nickelate (LiNiO2), lithium manganate (LiMn2O4), complex oxides (LiCoXNiYMnZO2, X+Y+Z=1), lithium vanadium compounds, V2O5, V6O13, VO2, MnO2, TiO2, MoV2O8, TiS2, V2S5, VS2, MoS2, MoS3, Cr3O8, Cr2O5, olivine-type LiMPO4 (M:Co, Ni, Mn, Fe), conductive polymers such as polyacetylene, polyaniline, polypyrrole, polythiophene and polyacene, porous carbon, and mixtures thereof.

Examples of separator include nonwoven fabric, cloth and microporous film mainly comprising a polyolefin such as polyethylene and polypropylene, and a combination thereof. It is not necessary to use the separator in a lithium ion secondary battery in which the cathode and the anode are arranged structurally without direct contact.

An electrolyte solution or an electrolyte to be used in the lithium ion secondary battery may include a well-known organic electrolyte solution, an inorganic solid electrolyte and a polymer solid electrolyte. The organic electrolyte solution is preferable from the viewpoint of electrical conductivity.

The organic electrolyte solution may comprise a organic solvent including ethers such as dibutyl ether, ethyleneglycol monomethyl ether, ethyleneglycol monoethyl ether, ethyleneglycol monobutyl ether, diethyleneglycol monomethyl ether and ethyleneglycol phenyl ether; amides such as N-methylformamide, N,N-dimethylformamide, N-ethylformamide, N,N-diethylformamide, N-methylacetamide, N,N-dimethylacetamide, N-ethylacetamide and N,N-diethylacetamide; sulfur-containing compounds such as dimethyl sulfoxide and sulfolane; dialkylketones such as methyl ethyl ketone and methyl isobutyl ketone; cyclic ethers such as tetrahydrofuran and 2-methoxytetrahydrofuran; cyclic carbonates such as ethylene carbonate, butylene carbonate, propylene carbonate and vinylene carbonate; chainlike carbonates such as diethyl carbonate, dimethyl carbonate, methylethyl carbonate and methylpropyl carbonate; cyclic carbonate esters such as γ-butyrolactone and γ-valerolactone; chainlike carbonate esters such as methyl acetate, ethyl acetate,

methyl propionate and ethyl propionate; N-methyl2-pyrrolidinone; acetonitrile, and nitromethane. The solvent may be used alone, or two or more solvents may be used in admixture.

Examples of the solute for the solvent include various types of lithium salts. Examples of typically known lithium salts include LiClO4, LiBF4, LiPF6, LiAlCl4, LiSbF6, LiSCN, LiCl, LiCF3SO3, LiCF3CO2, LiN(CF3SO2)2 and LiN(C2F5SO2)2.

Example of the polymer solid electrolyte include a polyethylene oxide derivative and a polymer containing the polyethylene oxide derivative, a polypropylene oxide derivative and a polymers containing the polypropylene oxide derivative, a phosphoric acid ester polymer, a polycarbonate derivative and a polymer containing the polycarbonate derivative.

There are no restrictions at all on selection of any of the other members required for the battery structure.

The structure of the lithium ion secondary battery may typically include, but not limited to, a structure in which strip-formed cathode and anode and a separator therebetween are wound around in a spiral fashion to form a rolled electrode group, which is inserted into a battery case and is sealed; and a structure in which a flat-formed cathode and anode and a separator therebetween are stacked to form a layered electrode plate group, which is inserted into an outer casing and sealed. The Lithium ion secondary battery may be used, for example, as a paper battery, a button battery, a coin battery, a stacked battery, a cylindrical battery and a square battery.

The lithium secondary battery comprising, as an anode material, the carbon material produced by using the raw petroleum coke composition according to the present invention or the carbon material produced by the method in the second aspect of the present invention, can achieve extremely favorable output characteristics in comparison with a lithium secondary battery comprising a conventional carbon material. Consequently, it can be used for vehicles such as hybrid vehides, plug-in hybrid vehicles and electric vehicles, and for industrial applications such as for electric power storage in system infrastructure.

[Examples]

The present invention will now be explained in details based on Examples and Comparative Examples. It should not be construed that the present invention is limited to these examples.

1. Raw petroleum coke compositions and a method for producing the compositions

(1) Raw petroleum coke composition A

Ordinary-pressure distillation residue oil having the sulfur content of 3.1% by weight was hydrodesulfurized in the presence of a catalyst so that the hydrocracking ratio was 25% or less, and hydrodesulfurization oil having the density of 0.92 at 15°C was obtained. Hydrodesulfurization conditions included the total pressure of 180 MPa, the hydrogen partial pressure of 160 MPa and the temperature of 380°C. Desulfurized vacuum light oil having the sulfur content of 500 weight-ppm and the density of 0.88 g/cm3 at 15°C was subjected to fluid catalytic cracking, thus obtaining fluid catalytic cracking residual oil having the density of 1.00 at 15°C: 1.00. This fluid catalytic cracking residual oil was selectively extracted with dimethylformamide so as to separate an aromatic portion from a saturated portion to obtain the aromatic portion. To the mixture of this extracted aromatic portion having the density of 1.10 at 15°C and the hydrodesulfurization oil having the density of 0.92 at 15°C at the weight ratio of 8:1, desulfurized and deasphalted oil was added so as to be 19% by weight (the mixture as a whole including the desulfurized and deasphalted oil itself was 100 % by weight), thus obtaining a stock oil composition for coke. This stock oil composition was introduced to a delayed coker for the coking process under an inert gas atmosphere at 550°C, thus obtaining the raw petroleum coke composition A.

(2) Raw petroleum coke composition B

In preparation of the stock oil composition for the raw petroleum coke composition A, to the mixture of the extracted aromatic portion and the hydrodesulfurization oil at the weight ratio of 8:1 was added desulfurized and deasphalted oil so as to be 11% by weight, thus obtaining a stock oil composition for coke. This stock oil composition was introduced to a delayed coker for the coking process under an inert gas atmosphere at 550°C, thus obtaining the raw petroleum coke composition B.

(3) Raw petroleum coke composition C

In preparation of the stock oil composition for the raw petroleum coke composition A, to the mixture of the extracted aromatic portion and the hydrodesulfurization oil at the weight ratio of 8:1 was added desulfurized and deasphalted oil so as to be 4% by weight, thus obtaining a stock oil composition for coke. This stock oil composition was introduced to a delayed coker for the coking process under an inert gas atmosphere at 550°C, thus obtaining the raw petroleum coke composition C.

(4) Raw petroleum coke composition D

In preparation of the stock oil composition of the raw petroleum coke composition A, to the mixture of the extracted aromatic portion and the hydrodesulfurization oil at the weight ratio of 6:1 was added desulfurized and deasphalted oil so as to be 17% by weight, thus obtaining a stock oil composition for coke. This stock oil composition was introduced to a delayed coker for the coking process under an inert gas atmosphere at 550°C, thus obtaining the raw petroleum coke composition D.

(5) Raw petroleum coke composition E

In preparation of the stock oil composition for the raw petroleum coke composition A, to the mixture of the extracted aromatic portion and the hydrodesulfurization oil at the weight ratio of 6:1 was added desulfurized and deasphalted oil so as to be 11% by weight, thus obtaining a stock oil composition for coke. This stock oil composition was introduced to a delayed coker for the coking process under an inert gas atmosphere at 550°C, thus obtaining the raw petroleum coke composition E.

(6) Raw petroleum coke composition F

In preparation of the stock oil composition for the raw petroleum coke composition A, to the mixture of the extracted aromatic portion and the hydrodesulfurization oil at the weight ratio of 6:1 was added desulfurized and deasphalted oil so as to be 6% by weight, thus obtaining a stock oil composition for coke. This stock oil composition was introduced to a delayed coker for the coking process under an inert gas atmosphere at 550°C, thus obtaining the raw petroleum coke composition F.

(7) Raw petroleum coke composition G

The hydrodesulfurization oil and the fluid catalytic cracking residual oil, which were raw materials of the stock oil composition for the raw petroleum coke composition A, were mixed at the weight ratio of 1:5, to which was added desulfurized and deasphalted oil so as to be 15% by weight, thus obtaining a stock oil composition for coke. This stock oil composition was introduced to a delayed coker for the coking process under an inert gas atmosphere at 550°C, thus obtaining the raw petroleum coke composition G.

(8) Raw petroleum coke composition H

The hydrodesulfurization oil and the fluid catalytic cracking residual oil, which were raw materials of the stock oil composition for the raw petroleum coke composition A, were mixed at the weight ratio of 1:5, to which was added desulfurized and deasphalted oil so as to be 7% by weight, thus obtaining a stock oil composition for coke. This stock oil composition was introduced to a delayed coker for the coking process under an inert gas atmosphere at 550°C, thus obtaining the raw petroleum coke composition H.

(9) Raw petroleum coke composition I

The hydrodesulfurization oil and the fluid catalytic cracking residual oil, which were raw materials of the stock oil composition for the raw petroleum coke composition A, were mixed at the weight ratio of 1:4, to which was added desulfurized and deasphalted oil so as to be 19% by weight, thus obtaining a stock oil composition for coke. This stock oil composition was introduced to a delayed coker for the coking process under an inert gas atmosphere at 550°C, thus obtaining the raw petroleum coke composition I.

(10) Raw petroleum coke composition J

The hydrodesulfurization oil and the fluid catalytic cracking residual oil, which were raw materials of the stock oil composition of the raw petroleum coke composition A, were mixed at the weight ratio of 1:4, to which was added desulfurized and deasphalted oil so as to be 16% by weight, thus obtaining a stock oil composition for coke. This stock oil composition was introduced to a delayed coker for the coking process under an inert gas atmosphere at 550°C, thus

obtaining the raw petroleum coke composition J.

(11) Raw petroleum coke composition K

The hydrodesulfurization oil and the fluid catalytic cracking residual oil, which were raw materials of the stock oil composition for the raw petroleum coke composition A, were mixed at the weight ratio of 1:4, to which was added desulfurized and deasphalted oil so as to be 11% by weight, thus obtaining a stock oil composition for coke. This stock oil composition was introduced to a delayed coker for the coking process under an inert gas atmosphere at 550°C, thus obtaining the raw petroleum coke composition K.

(12) Raw petroleum coke composition L

The hydrodesulfurization oil and the fluid catalytic cracking residual oil, which were raw materials of the stock oil composition for the raw petroleum coke composition A, were mixed at the weight ratio of 1:4, to which was added desulfurized and deasphalted oil so as to be 5% by weight, thus obtaining a stock oil composition for coke. This stock oil composition was introduced to a delayed coker for the coking process under an inert gas atmosphere at 550°C, thus obtaining the raw petroleum coke composition L.

(13) Raw petroleum coke composition M

The hydrodesulfurization oil and the fluid catalytic cracking residual oil, which were raw materials of the stock oil composition for the raw petroleum coke composition A, were mixed at the weight ratio of 1:4, to which was added desulfurized and deasphalted oil so as to be 3% by weight, thus obtaining a stock oil composition for coke. This stock oil composition was introduced to a delayed coker for the coking process under an inert gas atmosphere at 550°C, thus obtaining the raw petroleum coke composition M.

(14) Raw petroleum coke composition N

The hydrodesulfurization oil and the fluid catalytic cracking residual oil, which were raw materials of the stock oil composition for the raw petroleum coke composition A, were mixed at the weight ratio of 1:3, to which was added desulfurized and deasphalted oil so as to be 14% by weight, thus obtaining a stock oil composition for coke. This stock oil composition was introduced to a delayed coker for the coking process under an inert gas atmosphere at 550°C, thus obtaining the raw petroleum coke composition N.

(15) Raw petroleum coke composition O

The hydrodesulfurization oil and the fluid catalytic cracking residual oil, which were raw materials of the stock oil composition for the raw petroleum coke composition A, were mixed at the weight ratio of 1:3, to which was added desulfurized and deasphalted oil so as to be 7% by weight, thus obtaining a stock oil composition for coke. This stock oil composition was introduced to a delayed coker for the coking process under an inert gas atmosphere at 550°C, thus obtaining the raw petroleum coke composition O.

(16) Raw petroleum coke composition P

To the fluid catalytic cracking residual oil having the density of 1.00 at 15°C, which was a raw material of the stock oil composition for the raw petroleum coke composition A, was added and mixed n-heptane of the same volume as the residual oil, followed by selective extraction with dimethylformamide so as to separate a saturated portion form an aromatic portion to obtain the saturated portion. To the mixture of the fluid catalytic cracking residual oil and this saturated portion having the density of 0.90 at 15°C at the weight ratio of 1:1, desulfurized and deasphalted oil having the density of 0.92 at 15°C was added so as to be 16% by weight, thus obtaining a stock oil composition for coke. This stock oil composition was introduced to a delayed coker for the coking process under an inert gas atmosphere at 550°C, thus obtaining the raw petroleum coke composition P.

(17) Raw petroleum coke composition Q

To the mixture of the fluid catalytic cracking residual oil, which was a raw material of the stock oil composition for the raw petroleum coke composition P, and the extracted saturated portion at the weight ratio of 1:1, desulfurized and deasphalted oil was added so as to be 11% by weight, thus obtaining a stock oil composition for coke. This stock

oil composition was introduced to a delayed coker for the coking process under an inert gas atmosphere at 550°C, thus obtaining the raw petroleum coke composition Q.

(18) Raw petroleum coke composition R

To the mixture of the fluid catalytic cracking residual oil, which was a raw material of the stock oil composition for the raw petroleum coke composition P, and the extracted saturated portion at the weight ratio of 1:1, desulfurized and deasphalted oil was added so as to be 6% by weight, thus obtaining a stock oil composition for coke. This stock oil composition was introduced to a delayed coker for the coking process under an inert gas atmosphere at 550°C, thus obtaining the raw petroleum coke composition R.

(19) Raw petroleum coke composition S

To the mixture of the fluid catalytic cracking residual oil, which was a raw material of the stock oil composition for the raw petroleum coke composition P, and the extracted saturated portion at the weight ratio of 1:2, desulfurized and deasphalted oil was added so as to be 19% by weight, thus obtaining a stock oil composition for coke. This stock oil composition was introduced to a delayed coker for the coking process under an inert gas atmosphere at 550°C, thus obtaining the raw petroleum coke composition S.

(20) Raw petroleum coke composition T

To the mixture of the fluid catalytic cracking residual oil, which was a raw material of the stock oil composition for the raw petroleum coke composition P, and the extracted saturated portion at the weight ratio of 1:2, desulfurized and deasphalted oil was added so as to be 10% by weight, thus obtaining a stock oil composition for coke. This stock oil composition was introduced to a delayed coker for the coking process under an inert gas atmosphere at 550°C, thus obtaining the raw petroleum coke composition T.

(21) Raw petroleum coke composition U

To the mixture of the fluid catalytic cracking residual oil, which was a raw material of the stock oil composition for the raw petroleum coke composition P, and the extracted saturated portion at the weight ratio of 1:2, desulfurized and deasphalted oil was added so as to be 4% by weight, thus obtaining a stock oil composition for coke. This stock oil composition was introduced to a delayed coker for the coking process under an inert gas atmosphere at 550°C, thus obtaining the raw petroleum coke composition U.

2. Analyses of raw petroleum coke compositions

(1) Method for measuring H/C atomic ratio of raw petroleum coke compositions

The total hydrogen content in a raw petroleum coke composition was found by completely combusting a sample in an oxygen stream at 750°C, and measuring water content generated from combustion gas by a coulometric titration method (Karl Fischer's method). The total carbon content was found by combusting a raw petroleum coke composition sample in an oxygen stream at 1,150°C for conversion into carbon dioxide (partially carbon monoxide) and convey by an excess oxygen stream into a CO2 □ CO infrared detector to measure the total carbon content. The H/C of a raw petroleum coke composition was calculated as a ratio of a value obtained by dividing the total hydrogen content (TH (% by weight)) by atomic weight of hydrogen to a value obtained by dividing the total carbon content (TC (% by weight)) by atomic weight of carbon. The H/C values of the raw petroleum coke compositions A to U are shown in Table 1.

(2) Method for measuring micro-strength of raw petroleum coke com positions

The 2 g of sample of 20 to 30 mesh and twelve steel balls each having a diameter of 5/16 inch (7.9 mm) were placed in a steel cylinder (inner diameter: 25.4 mm, length: 304.8 mm) and the vertical face of the cylinder was rotated 800 times at 25 rpm in a direction orthogonal to the cylinder (i.e., rotated from the cylinder-standing state so that the top and the bottom of the cylinder were changed while keeping the rotational axis horizontal as if a propeller rotated). Then sieving of 48 mesh was performed, and the value of the micro-strength was obtained as a percentage ratio of the remaining sample weight on the sieve to the total sample weight. The values of micro-strength of the raw petroleum coke compositions A to U are shown in Table 1.

3. Carbonization and graphitization of raw petroleum coke compositions A to U

The thus obtained raw petroleum coke compositions were pulverized by a mechanical pulverizer (super rotor mill produced by Nisshin Engineering Inc.) and classified by a fine air classifier (turbo classifier produced by Nisshin Engineering Inc.), whereby a fine-particle material having an average particle diameter of 12 μm was obtained. These fine particles were carbonized by a roller hearth kiln produced by Takasago Industry Co., Ltd. under a nitrogen gas stream at the maximum achieving temperature of 1,200°C, while keeping the maximum achieving temperature for 5 hours. The thus obtained carbonized material was placed in a crucible, which was put in an electric furnace for graphitization in a nitrogen gas stream of 80 L/min. and at the maximum achieving temperature of 2,800°C. The rate of temperature rise at this time was 200°C/hour, the maximum achieving temperature was kept for 3 hours, and the rate of temperature fall was 100°C/hour till 1,000°C, which was then cooled to room temperature while keeping the nitrogen stream. The thus obtained graphitized materials will be referred to as graphite A to U so as to correspond to raw petroleum coke compositions A to U.

4. Method for producing graphite V

Raw petroleum coke composition K was introduced to a rotary kiln for calcination at 1,400°C, thus obtaining a carbon material. The thus obtained carbon material was pulverized by a mechanical pulverizer (super rotor mill produced by Nisshin Engineering Inc.) and was classified by a fine air classifier (turbo classifier produced by Nisshin Engineering Inc.), whereby a fine-particle carbon material having an average particle diameter of 12 μm was obtained. This carbon fine particle material was placed in a crucible, which was put in an electric furnace for graphitization in a nitrogen gas stream of 80 L/min. and at the maximum achieving temperature of 2,800°C. The rate of temperature rise at this time was 200°C/hour, the maximum achieving temperature was kept for 16 hours, and the rate of temperature fall was 100°C/hour till 1,000°C, which was then cooled to room temperature while keeping the nitrogen stream. The thus obtained graphitized particles will be referred to as graphite V.

5. Method for producing graphite W

Raw petroleum coke composition K was introduced to a rotary kiln for calcination at 1,400°C, thus obtaining a carbon material. The thus obtained carbon material was placed in a crucible, which was then placed in an electric furnace for graphitization in a nitrogen gas stream of 80 L/min. and at the maximum achieving temperature of 2,800°C. The rate of temperature rise at this time was 200°C/hour, the maximum achieving temperature was kept for 16 hours, and the rate of temperature fall was 100°C/hour till 1,000°C, which was then cooled to room temperature while keeping the nitrogen stream. The thus obtained graphite was pulverized by a mechanical pulverizer (super rotor mill produced by Nisshin Engineering Inc.) and was classified by a fine air classifier (turbo classifier produced by Nisshin Engineering Inc.), whereby a fine-particle carbon material having an average particle diameter of 12 μm was obtained. The thus obtained graphite particles will be referred to as graphite W.

6. Fabrication of batteries and methods for evaluating their characteristics

(1) Method for fabricating batteries

A sectional-view of a fabricated battery 10 is shown in Fig.1. A cathode 11 was a sheet electrode prepared by mixing lithium nickelate (LiNi0.8Co0.15Al0.05 produced by Toda Kogyo Corp.) having an average particle diameter of 6 μm as a cathode material, polyvinylidene fluoride (KF#1320 produced by Kureha Corporation) as a binder, and acetylene black (Denka black produced by Denki Kagaku Kogyo K.K.) at the weight ratio of 89:6:5, adding N-methyl-2-pyrrolidinone thereto, kneading the resultant to form a paste, and applying the paste to a single surface of aluminum foil having thickness of 30 μm, followed by drying and rolling, and cutting into a sheet having the applied portion of 30 mm in width and 50 mm in length. The applied amount per unit area was set at 10 mg/cm2 as the weight of lithium nickelate.

At a part of this sheet electrode, the cathode mix was scraped off orthogonally to the longitudinal direction of the sheet, and the thus exposed aluminum foil was connected with a collector 12 (aluminum foil) of the applied part in an integrated manner, thus playing a role as a cathode lead plate.

An anode 13 was a sheet electrode prepared by mixing graphite powder of each of graphites A to W as an anode material, polyvinylidene fluoride (KF#9310 produced by Kureha Corporation) as a binder, acetylene black (Denka black produced by Denki Kagaku Kogyo K.K.) at the weight ratio of 91:2:8, adding N-methyl-2-pyrrolidinone thereto, kneading the resultant to form a paste, and applying the paste to a single surface of copper foil having thickness of 18 μm, followed by drying and rolling, and cutting into a sheet having the applied portion of 32 mm in width and 52 mm in length. The applied amount per unit area was set at 6 mg/cm2 as the weight of graphite powder.

At a part of this sheet electrode, the anode mix was scraped off orthogonally to the longitudinal direction of the sheet, and the thus exposed copper foil was connected with a collector 14 (copper foil) of the applied part in an integrated manner, thus playing a role as an anode lead plate.

The battery 10 was fabricated by drying the cathode 11, the anode 13, a separator 15, an outer casing 17 and other components sufficiently, and introduced them into a glove box filled with argon gas having the dew point of -100°C for assembly. As the drying conditions, the cathode 11 and the anode 13 were dried at 150°C under a vacuum state for 12 hours or longer, and the separator 15 and other components were dried at 70°C under a vacuum state for 12 hours or longer.

The thus dried cathode 11 and anode 13 were laminated so that the application part of the cathode and the application part of the anode are opposed via micro-porous polypropylene film (□2400 produced by Celgard Corp.), which was fixed with a polyimide tape. Herein, the cathode and the anode were laminated so that the perimeter part of the cathode application part that was projected onto the application part of the anode was surrounded inside the perimeter part of the anode application part. The thus obtained single-layer electrode body was embedded in aluminum lamination film, to which electrolyte solution was poured, and the laminate film was heat-sealed while letting the aforementioned cathode/anode lead plates stick out, thus fabricating a sealed single-layer laminate battery. The electrolyte solution used was obtained by dissolving lithium hexafluorophosphate ($LiPF_6$) into the mixed solvent of ethylene carbonate and ethylmethyl carbonate at the volume ratio of 3:7 so as to have a lithium hexafluorophosphate ($LiPF_6$) concentration of 1 mol/L.

(2) Method for evaluating batteries

The thus obtained batteries were installed in a constant temperature room of 25°C, and the following charge and discharge experiment was conducted. Firstly, charge was conducted at a constant current of 1.5 mA until the battery voltage reached 4.2 V. After 10-minute pause, discharge was conducted at a constant current of 1.5 mA until the battery voltage reached 3.0 V, and such a charge and discharge cycle was repeated 10 times. This charge and discharge cycle was to check abnormality of the batteries. It was found that all of the batteries fabricated in the present embodiment were free from abnormality.

Next, constant current and constant voltage charge was conducted at the charge current of 15 mA and the charge voltage of 4.2 V and for 3 hours as the charge time, and after 1-minute pause, discharge was conducted at the same constant current (15 mA) until the battery voltage reached 3.0V. This discharge current value corresponded to 1 mA/cm2. The thus obtained discharge capacity was X (mAh). After 10-minute pause, charge was conducted under the same condition, and after 1-minute pause, discharge was conducted at the constant current of 150 mA until the battery voltage reached 3.0 V. This discharge current value corresponded to 10 mA/cm2. The thus obtained discharge capacity was Y (mAh).

The ratio (Y/X) of the discharge capacity obtained at the current density of 10 mA/cm2 to the discharge capacity obtained at the current density of 1 mA/cm2 was calculated as percentage. Table 1 shows these results.

[Table 1]

| Raw Petroleum Coke Comp. | H/C of Raw Petroleum Coke Comp | Micro-Strength of Raw Petroleum Coke Comp. (%) | Graphite Powder Corresponding to Raw Petroleum Coke Comp. | Discharge Capacity Obtained at 1 mA/cm2 (mAh) | Discharge Capacity Obtained at 10 mA/cm2 (mAh) | Capacity Maintenance Ratio (%) |
|---|---|---|---|---|---|---|
| A | 0.23 | 25 | A | 23.4 | 16.7 | 71.4 |
| B | 0.18 | 12 | B | 23.6 | 17.5 | 74.2 |
| C | 0.15 | 4 | C | 23.8 | 17.5 | 73.5 |
| D | 0.29 | 18 | D | 23.0 | 17.3 | 75.2 |
| E | 0.27 | 13 | E | 23.1 | 18.4 | 79.7 |
| F | 0.25 | 6 | F | 23.3 | 17.9 | 76.8 |
| G | 0.32 | 17 | G | 22.7 | 20.8 | 91.6 |
| H | 0.30 | 7 | H | 22.9 | 20.9 | 91.3 |
| I | 0.43 | 23 | I | 21.9 | 16.7 | 76.3 |
| J | 0.41 | 19 | J | 22.1 | 18.2 | 82.4 |

(continued)

| Raw Petroleum Coke Comp. | H/C of Raw Petroleum Coke Comp | Micro-Strength of Raw Petroleum Coke Comp. (%) | Graphite Powder Corresponding to Raw Petroleum Coke Comp. | Discharge Capacity Obtained at 1 mA/cm2 (mAh) | Discharge Capacity Obtained at 10 mA/cm2 (mAh) | Capacity Maintenance Ratio (%) |
|---|---|---|---|---|---|---|
| K | 0.40 | 12 | K | 22.3 | 21.3 | 95.5 |
| L | 0.39 | 6 | L | 22.5 | 18.7 | 83.1 |
| M | 0.38 | 3 | M | 22.6 | 17.7 | 78.3 |
| N | 0.50 | 16 | N | 21.7 | 20.0 | 92.2 |
| O | 0.49 | 8 | O | 21.9 | 20.1 | 91.8 |
| P | 3.53 | 18 | P | 21.4 | 16.9 | 79.0 |
| Q | 0.52 | 13 | Q | 21.6 | 17.8 | 82.4 |
| R | 0.51 | 5 | R | 21.6 | 16.9 | 78.2 |
| S | 0.73 | 21 | S | 20.8 | 15.5 | 74.5 |
| T | 0.70 | 11 | T | 22.3 | 17.5 | 78.5 |
| U | 0.66 | 4 | U | 21.2 | 15.9 | 75.0 |
| K | 0.40 | 12 | V | 22.0 | 19.9 | 90.5 |
| K | 0.40 | 12 | W | 21.5 | 19.1 | 88.8 |

7. Considerations on examination results

In Table 1, the H/C values and micro-strength of the raw petroleum coke compositions A to U; the discharge capacity at the current density of 1 mA/cm2 and the discharge capacity at the current density of 10 mA/cm2 of the lithium ion secondary batteries using graphite A to W corresponding to the raw petroleum coke compositions A to U as anodes; and the percentage ratios of the discharge capacity at the current density of 10 mA/cm2 to the discharge capacity at the current density of 1 mA/cm2 are shown.

In Fig. 2 and Fig. 3, the relationships between the H/C values and the micro-strength of the raw petroleum coke compositions A to U and the percentage ratios of the discharge capacity at the current density of 10 mA/cm2 to the discharge capacity at the current density of 1 mA/cm2 of the lithium ion secondary batteries using graphite A to W corresponding to the raw petroleum coke compositions A to U as anodes are shown.

It is evident in Table 1, Fig. 2 and Fig. 3 that the batteries using, as anodes, graphite of the raw petroleum coke compositions (G, H, K, N, 0) having the H/C values of 0.3 to 0.5 and the micro-strength of 7 to 17% by weight in the ranges of the present invention, showed the discharge capacity maintenance ratio of 88% or higher, and were lithium secondary batteries having extremely excellent output characteristics. As for the raw petroleum coke compositions A, C, D, F, I, J, L, M, P, R, S and U, the content of the desulfurized and deasphalted oil was outside of the range of 7 to 15% by weight. As for the raw petroleum coke compositions B, E and T, although the content of the desulfurized and deasphalted oil was within the range of 7 to 15% by weight, the aromatic index fa was outside of the range of 0.3 to 0.65. As for the raw petroleum coke composition Q, although the content of the desulfurized and deasphalted oil was within the range of 7 to 15% by weight, the normal paraffin content was outside of the range of 5 to 20% by weight.

As for the method for producing graphite using the raw petroleum coke composition K, the graphite powder K obtained by carbonization and graphitization after pulverization and classification of the raw petroleum coke composition showed the discharge capacity maintenance ratio of 95.5%. On the other hand, the graphite powder V obtained by graphitization after pulverization and classification of the carbonized raw petroleum coke composition K, and the graphite powder W obtained by pulverization and classification of the carbonized and then graphitized raw petroleum coke composition K showed 90.5 % and 88.8%, respectively. It is evident that the graphite powder obtained by the method for producing the graphite powder is superior, the method comprising the step of carbonizing and/or the step of graphitizing after the step of pulverizing a raw petroleum coke composition to form powder having an average particle diameter of 30 μm or less.

**Description of Symbols**

10 Battery
11 Cathode
12 Cathode collector
13 Anode
14 Anode collector
15 Separator
17 Outer casing

## Claims

1. A raw petroleum coke composition for an anode carbon material of a lithium ion secondary battery, the raw petroleum coke composition being produced by subjecting a heavy-oil composition to a delayed coking process, and comprising an atomic ratio of hydrogen atoms H to carbon atoms C (H/C atomic ratio) of 0.30 to 0.50, and a micro-strength of 7 to 17% by weight.

2. The raw petroleum coke composition for an anode carbon material of a lithium ion secondary battery according to claim 1, wherein said heavy-oil composition has an aromatic index fa of 0.3 to 0.65 and normal paraffin content of 5 to 20% by weight, and comprises 7 to 15% by weight of deasphalted oil which has been subjected to desulfurization.

3. A method for producing an anode carbon material of a lithium ion secondary battery, comprising the steps of:

   pulverizing the raw petroleum coke composition of claim 1 or 2 into particles having an average particle diameter of 30 μm or less, and
   subjecting the particles to carbonization and/or graphitization.

4. A lithium ion secondary battery comprising an anode comprising the carbon material produced by the method according to claim 3.

## Patentansprüche

1. Rohpetrolkokszusammensetzung für ein Anoden-Kohlenstoffmaterial einer Lithiumionen-Sekundärbatterie, wobei die Rohpetrolkokszusammensetzung produziert wird, indem eine Schwerölzusammensetzung einem verlangsamten Verkokungsprozess ausgesetzt wird, und die ein Atomverhältnis von Wasserstoffatomen H zu Kohlenstoffatomen C (H/C-Atomverhältnis) von 0,30 bis 0,50 und eine Mikrofestigkeit von 7 bis 17 Gew.-% umfasst.

2. Rohpetrolkokszusammensetzung für ein Anoden-Kohlenstoffmaterial einer Lithiumionen-Sekundärbatterie nach Anspruch 1, wobei die Schwerölzusammensetzung einen Aromatizitätsindex fa von 0,3 bis 0,65 und einen normalen Paraffingehalt von 5 bis 20 Gew.-% aufweist, und 7 bis 15 Gew.-% entasphaltiertes Öl, das einer Entschwefelung unterzogen wurde, umfasst.

3. Verfahren zum Herstellen eines Anoden-Kohlenstoffmaterials einer Lithiumionen-Sekundärbatterie, das folgende Schritte umfasst:

   Pulverisieren der Rohpetrolkokszusammensetzung nach Anspruch 1 oder 2 in Partikel, die einen durchschnittlichen Partikeldurchmesser von 30 μm oder weniger aufweisen, und
   Unterziehen der Partikel einer Verkokung und/oder Graphitisierung.

4. Lithiumionen-Sekundärbatterie, die eine Anode umfasst, welche das Kohlenstoffmaterial umfasst, das durch das Verfahren nach Anspruch 3 produziert wurde.

## Revendications

1. Composition de coke de pétrole brut pour un matériau de carbone d'anode d'une batterie secondaire lithium-ion, la composition de coke de pétrole brut étant produite par le fait de soumettre une composition d'huile lourde à un processus de cokéfaction retardé, et comprenant un rapport atomique d'atomes d'hydrogène H à des atomes de carbone C (rapport atomique H/C) compris entre 0,30 et 0,50, et une micro-robustesse comprise entre 7 et 17% en poids.

2. Composition de coke de pétrole brut pour un matériau de carbone d'anode d'une batterie secondaire lithium-ion selon la revendication 1, dans laquelle ladite composition d'huile lourde a un indice aromatique fa compris entre 0,3 et 0,65 et une teneur en paraffine normale comprise entre 5 et 20 % en poids, et comprend entre 7 et 15% en poids d'huile désasphaltée qui a été soumise à une désulfuration.

3. Procédé pour produire un matériau de carbone d'anode d'une batterie secondaire lithium-ion, comprenant les étapes consistant à :

   pulvériser la composition de coke de pétrole brut selon la revendication 1 ou 2 en particules ayant un diamètre de particules moyen de 30 $\mu$m ou moins, et
   soumettre les particules à une carbonisation et/ou à une graphitisation.

4. Batterie secondaire lithium-ion comprenant une anode comprenant le matériau de carbone produit par le procédé selon la revendication 3.

FIG. 1

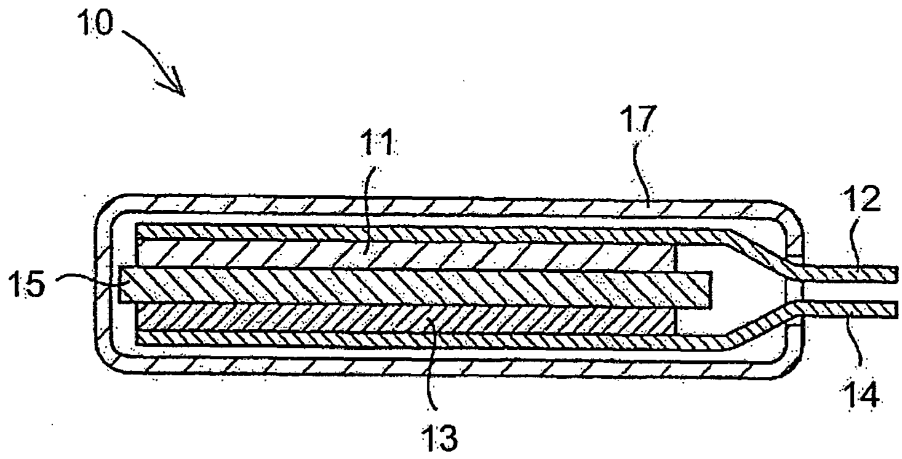
10
11
17
12
15
14
13

FIG. 2

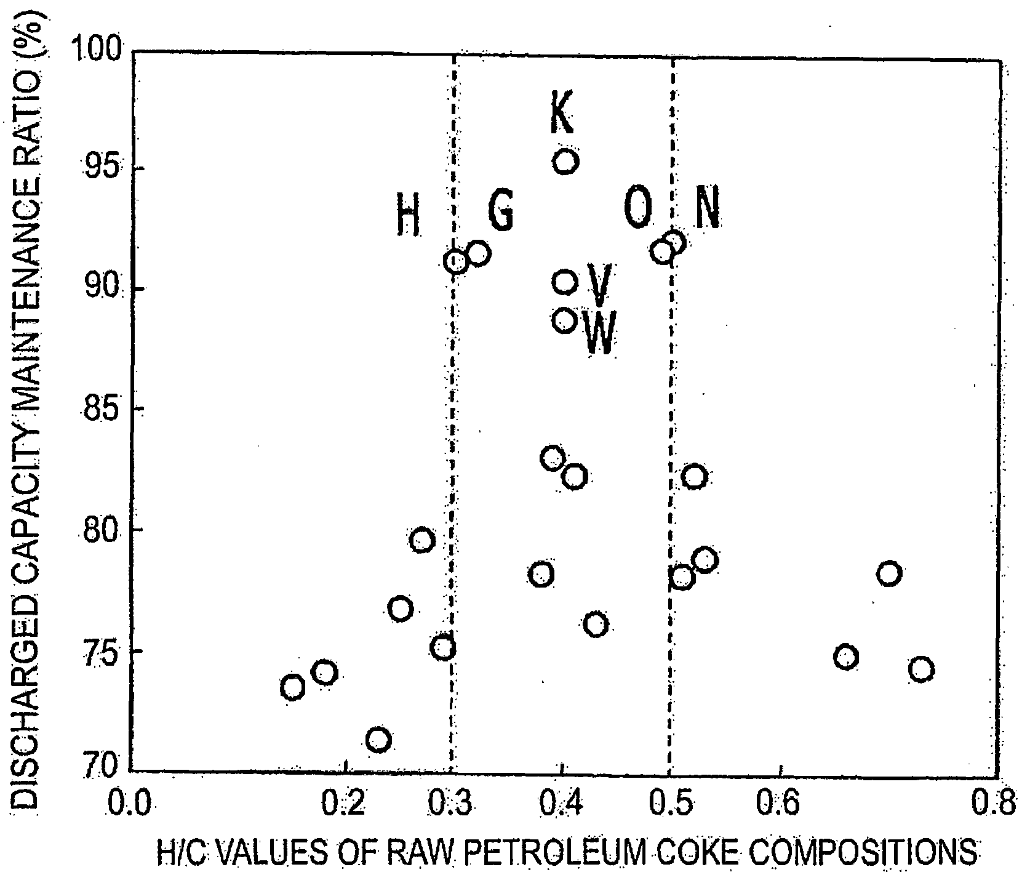
DISCHARGED CAPACITY MAINTENANCE RATIO (%)
100
95
90
85
80
75
70
0.0
0.2
0.3
0.4
0.5
0.6
0.8
H/C VALUES OF RAW PETROLEUM COKE COMPOSITIONS
K
H
G
O
N
V
W

FIG. 3

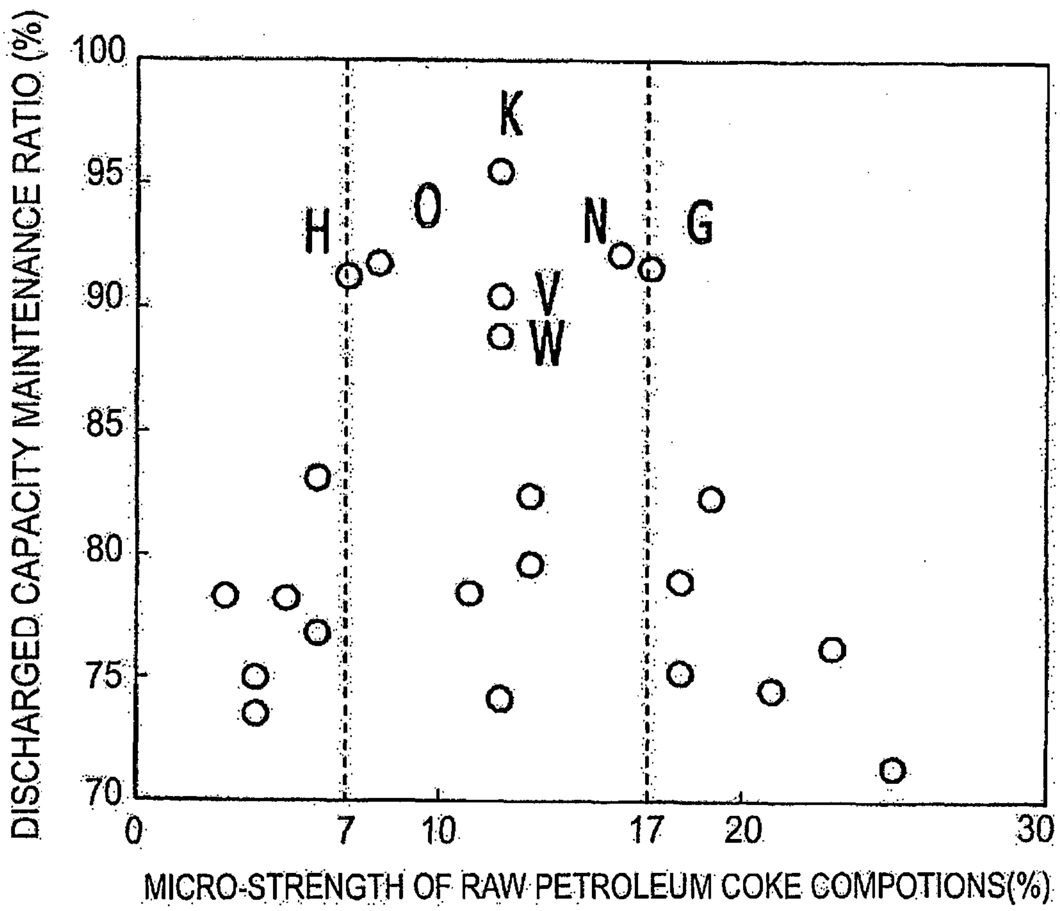
DISCHARGED CAPACITY MAINTENANCE RATIO (%)
100
95
90
85
80
75
70
0
7
10
17
20
30
MICRO-STRENGTH OF RAW PETROLEUM COKE COMPOTIONS(%)
K
H
O
N
G
V
W

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3056519 B
- JP 4233508 B


### Non-patent literature cited in the description


- *Carbon,* 1988, vol. 26 (1), 49-55